# EUROPEAN PATENT SPECIFICATION

(11) **EP 0 396 488 B1**
(45) Date of publication and mention of the grant of the patent: **20.12.1995**
(21) Application number: 90500044.4
(22) Date of filing: 25.04.1990
(51) Int. Cl.: G09B 15/08, G09B 13/02

(54) **System for simultaneous multiple keyboard teaching using closed-circuit television**
System zur gleichzeitigen Gruppen-Unterrichtung der Bedienung von Tastaturen unter Anwendung von geschlossenen Fernsehschaltkreisen
Système pour l'enseignement par groupe simultané de la manipulation des claviers, avec emploi de circuits fermés de télévision

(30) Priority: 04.05.1989 ES 8901542
(43) Date of publication of application: 07.11.1990
(73) Proprietor: Palacio Lopez, Domingo, E-28019 Madrid (ES); Caaveiro Pernas, Jesus, E-28008 Madrid (ES)
(72) Inventor: Palacio Lopez, Domingo, E-28019 Madrid (ES); Caaveiro Pernas, Jesus, E-28008 Madrid (ES)

(56) References cited:
- WO-A-84/00633
- FR-A- 2 307 322
- US-A- 3 894 346
- US-A- 4 386 551
- AUDIO ENGINEERING SOCIETY. PAPERS PRESENTED AT THE 35TH CONVENTION, 21st - 24thOctober 1968, pages 1-13, Audio Engineering Society, New York, US, 275 p.; V.J.BLONG: "An electronic music learning system"

## Description

This invention concerns a "System for simultaneous multiple keyboard teaching using closed-circuit television."

A system for simultaneous multiple keyboard teaching is for example known from WO-A-8 400 633, which describes a SYSTEM FOR SIMULTANEOUS MULTIPLE KEYBOARD TEACHING being a facility combining piano keyboards, audio intercommunication, and a microphone-headset, all in a single operating unit consisting of: Teacher console with piano-keyboard and its electro-musical circuits, cassette recorder, microphone-headset socket, controls for verbal-musical monitoring between teacher and pupil and viceversa provided with LED; Pupil console, each with piano-keyboard and circuitry, circuits for illuminating each key when pressed by the teacher on his equivalent keyboard; audio circuits, including teacher keyboard and microphone output to pupil headsets, pupil keyboard output to teacher headset, audio interconnections for pupil keyboards and microphones with controls on the teacher's table and connections to console a) cassette allowing recording and reproduction in either direction of electro-acoustical signals generated in keyboards and microphones; headsets, the same number as the consoles.

A major problem in the teaching of keyboard musical instruments is the need for the teacher to attend to each pupil individually, instructing him and correcting his mistakes separately while the others are left inactive.

The impossibility of visually monitoring several pupils at the same time hinders collective instruction, a procedure that is feasible and standard in other types of school education.

Up until now, some music teaching centers have mitigated the problem slightly by positioning a small number of instruments (three, four, five...) opposite to the teacher keyboard. This has the inconvenince of what is called the "mirror effect", in which the pupil sees the teacher's right hand on his left-hand left and viceversa, creating quite a lot of confusion among very young pupils.

Another complication, by no means negligible, derives from the acoustic nature of the methods being used, which do not allow the different exercises or different levels being simultaneously practised by a group of pupils in the same classroom to be mutually isolated from each other.

Even though almost all electronic musical instruments have a headset socket for silent study on one's own, this does not allow the instructive process to be monitored by the teacher, who cannot hear the pupils' performance.

These situations bring with them numerous inconveniences in this kind of teaching: very little time is devoted to each beginner in conservatories and academies, with a consequent limitation on the number of pupils enrolling, a huge imbalance between the number of places available and the demand for them, very high cost of private classes when greater teacher attention is desired or needed, etc...

This invention produces a satisfactory solution to the obstacles pointed out above, making collective mass teaching feasible in keyboard instrument classes, in addition to making it possible for pupils to receive more hours of instruction in a pleasant fashion.

Furthermore, as a consequence of the above, general teaching of music can, from its earliest stages, be carried out in accordance with the most modern guidelines in this respect, which advocate handling the instrument from the very first class, mixing solfeggios with instrument work.

With the methods used these days, this is not possible because of the enormous number of teachers and classrooms it requires.

The system for simultaneous multiple keyboard teaching submitted here includes and is characterized by a facility that combines keyboards, closed-circuit television, audio intercommunication, circuits for internally illuminating each key and microphone-headsets, all in a single operating unit.

Its detailed description is as follows:
a) TEACHER CONSOLE, consisting of
   - Piano-keyboard with sound generated by electro-musical circuitry. Each key is, moreover, a switch which, when pressed, closes a circuit allowing the equivalent key in the pupil console to illuminate, either for all pupils or selectively.
   - Television monitors, of no fixed size or number, placed vertically in rows behind the keyboard and in the middle distance with respect to
   - Audio and video camera controls. These controls include the following functions: monitoring each pupil-to-teacher music outputs; monitoring teacher-to-pupil music outputs; monitoring pupil-to-pupil; verbal communication-call with all, several or one pupil; oral pupil-to-pupil intercommunication; volume, treble and bass controls for each sound source; pupil call LED; telecontrols for camera zoom and movement; and sending signals to different television monitors. All switches will have LED to indicate when they are in operation and, for the "pupil call" will be flashing.
   - Cassette recorder for recording and playing back to and from any console in the system. This equipment has only a recording button, giving easier operation.
   - Microphone-headset connector.

   Naturally, this console also has appropriate electronics for the functions described above. Amplification and build-in speaker can be included for listening without headsets, as can an output to external speakers.
b) PUPIL CONSOLES, the same in number as the teacher console television monitors. Each consists of
   - Piano-keyboard with the same characteristics as that of the teacher.
   - Teacher call button, with a flashing LED illuminating on the teacher's table.
   - System for illuminating each key when the teacher presses the corresponding key on his keyboard.
   - Volume pedal-control, generally known as the "swell".
   - Microphone-headset connector.

   As with console a), these consoles contain the electronics that their functions need and an optional built-in speaker.
c) VIDEO CAMERAS with remote control for zoom and spatial orientation.
   These are focused vertically above each keyboard, of both teacher and pupils, and connected by closed-circuit to the teacher console monitors and to
d) LARGE TV MONITOR, a screen easily seen by the pupils that receives a signal from each camera as decided by the teacher. This can be replaced by the console monitors b).
e) MICROPHONE-HEADSETS, as many as there are consoles, allowing monitorized listening of any of the several sound sources.

This system's components have a well-known desing, so they do not need to be described for the invention to be understood. They can operate mechanically or via pre-programmed microprocessors.

Some drawings are attached to aid understanding of the above.

In a diagrammatic way, and solely for the purpose of providing an example, they show a practical situation of use of the equipment.

Figure number one shows the teacher console with: (1) Piano-keyboard that can have between four and seven octaves; (2) Television monitors, sixteen in number; (3) Audio and camera controls; (4) Cassette recorder; (5) Multi-feed headset connector.

Figure number two shows the system in use, with just two pupil consoles for reasons of space. Here can be seen: (1) Teacher with microphone-headset; (2) Teacher console; (3) Pupils with microphone-headsets; (4) Pupil consoles; (5) Large television monitor; (6) Video cameras.

In this figure, one pupil is concentrating on his keyboard and another is paying attention to visual examples on the large screen placed behind the teacher.

As can be deduced easily from the explanations and drawings provided, the instructor at all times monitors the pupils, both visually and aurally, yet without one pupil being acoustically disturbed by another.

The music-sound examples through the headsets and the visual displays of fingering on the large screen provided by the teacher are reinforced by illumination of the actual keys that should be pressed and also by verbal instructions given to the pupil via the microphone.

As well as being used for communication with the teacher to clarify doubts, the pupil microphone is useful for singing the music (solfeggio) that he is practising or any other music, in line with the most advanced psychological theories of music teaching.

The interconnections between pupils, which route via the teacher's table, allow one or other to be heard selectively as necessary.

Furthermore, the pupil can listen to his own performance previously recorded on the instructor's console. The recording may also be heard via external amplification.

Given the facility's characteristics described above, it would be equally applicable for a range of teaching processes that use other types of keyboard, such as typewriters and computers, merely by replacing these keyboards for the piano-keyboard and omitting the musical-artistic parameters.

This would consequently imply greater industrial application for the invention.

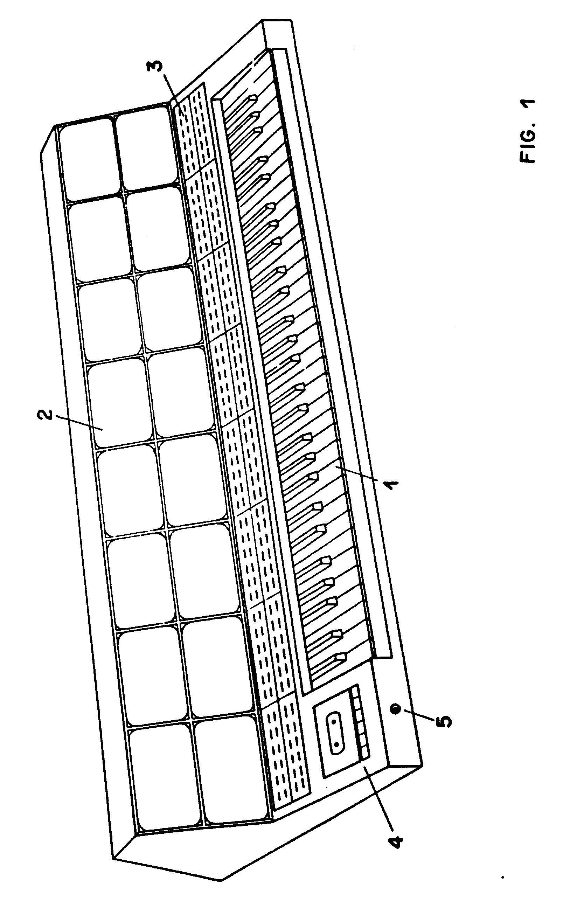

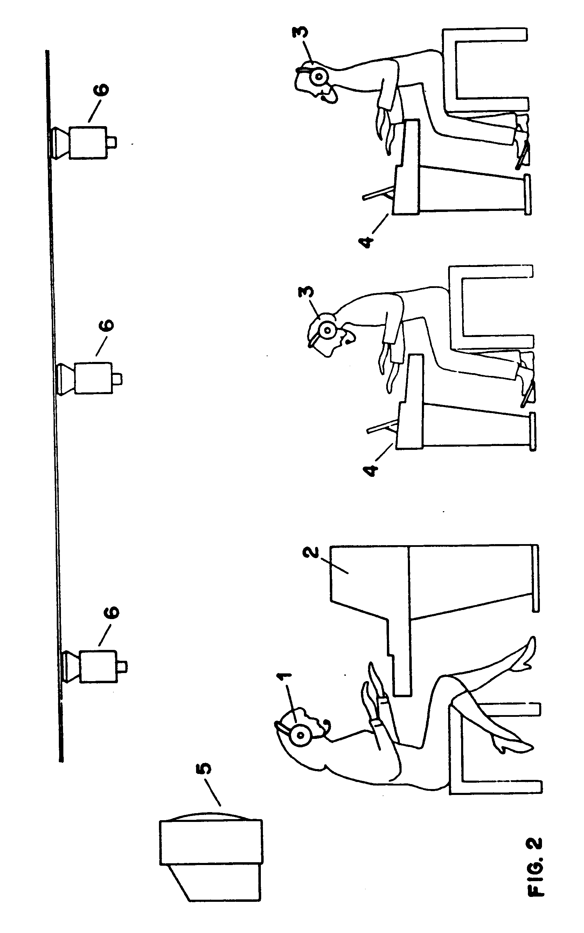

## Claims

1. SYSTEM FOR SIMULTANEOUS MULTIPLE KEYBOARD TEACHING USING CLOSED-CIRCUIT TELEVISION, being a facility combining piano keyboards, closed-circuit television, audio intercommunication, circuits for internal illumination of each pupil key and microphone-headsets, all in a single operating unit consisting of: a) Teacher console with piano-keyboard and its electro-musical circuits, television monitors, cassette recorder, microphone-headset socket, controls for verbal-musical monitoring between teacher and pupil and viceversa provided with LED, video camera telecontrols, switches for sending video camera signals to the different monitors, flashing pupil-call LED. b) Pupil console, each with piano-keyboard and circuitry, teacher call button, circuits for illuminating each key when pressed by the teacher on his equivalent keyboard, volume pedal-control, multi-feed connector for insertion into microphone-headset. c) Video cameras with remote zoom and swivel control, focused vertically above the keyboards, connected to the teacher monitors and to, d) Large television monitor that can be replaced by each pupil's individual monitor, where any video camera signal may be displayed as controlled by the teacher. e) Audio circuits, including teacher keyboard and microphone output to pupil headsets, pupil keyboard and microphone outputs to teacher headset, audio interconnections for pupil keyboards and microphones with controls on the teacher's table and connections to console a) cassette allowing recording and reproduction in either direction of electro-acoustical signals generated in keyboards and microphones. f) Microphone-headsets, the same number as the consoles.

## Patentansprüche

1. System für die simultane und vielfache Keyboard-Didaktik unter Anwendung von geschlossenen Fernsehstromkreisen in Form einer Anlage, die in einer Betriebseinheit Klaviertastaturen, geschlossene Fernsehstromkreise, Audio-Wechselsprechanlagen, Stromkreise für die innere Beleuchtung jeder Schülertaste und Kopfhörer mit Mikrofon vereint; diese Anlage besteht aus: a) Lehrerpult mit Klaviertastatur und ihren elektromusikalischen Stromkreisen, Fernsehmonitoren, Audio-Gerät zur Aufnahme auf Cassetten, Anschluß für Kopfhörer mit Mikrofon, mit LED ausgestatteten Steuerungen für die verbalmusikalischen Monitorisierungsfunktionen zwischen Lehrer und Schülern und umgekehrt, Fernbedienungen für Videokameras, Umschaltern für die Sendung der Videokamerasignale an die verschiedenen Monitore, blinkender LED für Schülerruf. b) Schülerpulten, jedes davon mit Klaviertastatur und ihren Stromkreisen, Bedienungsknopf zum Rufen des Lehrers, Stromkreisen für die Beleuchtung jeder Taste, wenn der Lehrer auf seiner Tastatur die dieser entsprechende Taste bedient, Lautstärkesteuerung mit Pedal, Vielfachleiter-Steckverbindung zum Einstecken des Kopfhörers mit Mikrofon. c) Videokameras mit Fernbedienung für Zoom und Drehungen, die auf die Vertikale der Tastaturen eingestellt sind und mit den Monitoren des Lehrers verbunden und mit d) einem großen Fernsehbildschirm, der durch Einzelbildschirme jedes Schülers ersetzt werden kann, zu dem der Lehrer jedes beliebige Videokamerasignal senden kann. e) Audiostromkreisen, die einen Ausgang von Lehrertastatur und -mikrofon zu den Schülerkopfhörern umfassen sowie Ausgänge von den Schülertastaturen und -mikrofonen zu den Lehrerkopfhörern, Audio-Verbundschaltungen für Schülertastaturen und -mikrofone mit auf dem Tisch des Lehrers befindlichen Steuerungen, Verbindungen mit dem Tonbandgerät des Pultes a), die die Aufnahme und Wiedergabe in jeder beliebigen Richtung der in den Tastaturen und Mikrofonen erzeugten elektroakustischen Signale ermöglichen. f) Kopfhörern mit Mikrofon in gleicher Anzahl wie Pulte.

## Revendications

1. SYSTEME POUR LA DIDACTIQUE SIMULTANEE ET MULTIPLE DE CLAVIER, PAR L'EMPLOI DE CIRCUITS FERMES DE TELEVISION, cette installation s'intégrant dans une unité opérationnelle claviers de piano, circuits fermés de télévision, intercommunications audio, circuits pour l'éclairage intérieur de chaque touche du clavier d'élève et auriculaires-micros. Il comporte: a) Pupitre du professeur, avec un clavier de piano et ses circuits électro-musicaux, écrans de télévision, enregistreur audio à cassette, prise pour auriculaires et micro, contrôles des fonctions de monitorisation verbale et musicale entre professeur et élèves, et vice-versa, pourvus de lampes témoins, télécommandes de caméras vidéo, commutateurs pour l'envoi des signaux des caméras aux différents écrans, lampe intermittente d'appel de l'élève. b) Pupitres d'élève, chacun avec son clavier de piano et ses circuits, son bouton d'appel du professeur, circuits pour l'éclairage de chaque touche lorsque le professeur frappe sur son clavier la même touche, contrôle de volume à pédale, connecteur multiconducteur pour insérer un auriculaire-micro. c) Caméras de vidéo avec télécommande pour zoom et rotations, braquées à la verticale des claviers et connectées aux écrans du professeur. d) Grand écran de télévision qui peut être remplacé par des écrans individuels pour chaque élève, sur lequel le professeur peut envoyer n'importe quel signal de caméra vidéo. e) Circuits audio, comprenant sortie de clavier et de micro du professeur aux auriculaires de l'élève, sorties des claviers et micro des élèves aux auriculaires du professeur, interconnexions audio des claviers et micros des élèves avec les commandes situées sur la table du professeur, connexions à la cassette du pupitre a) permettant l'enregistrement et la reproduction, dans n'importe quel sens, des signaux électro-acoustiques générés au niveau des claviers et des micros. f) Auriculaires-micros en nombre égal à celui des pupitres.
